# EUROPÄISCHE PATENTANMELDUNG

(11) **EP 3 418 092 A1**
(43) Veröffentlichungstag der Anmeldung: **26.12.2018**
(21) Anmeldenummer: 18178411.7
(22) Anmeldetag: 19.06.2018
(51) Int. Cl.: B60H 1/34

(54) **LUFTAUSSTRÖMER**

(30) Priorität: 23.06.2017 DE 102017113906
(71) Anmelder: Dr. Schneider Kunststoffwerke GmbH, 96317 Kronach-Neuses (DE)
(72) Erfinder: Kraus, Lukas, 96317 Kronach (DE); Wittig, Alexander, 96358 Teuschnitz (DE)

(57) **Zusammenfassung**

Luftausströmer (10), der ein Gehäuse, ein Luftleitelement (30) und eine Absperreinrichtung aufweist, wobei das Luftleitelement (30) im Bereich einer Luftaustrittsöffnung (14) im Gehäuse des Luftausströmers (10) angeordnet und die Absperreinrichtung in Luftströmungsrichtung dem Luftleitelement (30) vorgelagert ist. Die Absperreinrichtung weist eine Absperrwand (52) auf, welche als Teil der Mantelfläche eines Zylinders ausgebildet ist, wobei die Absperreinrichtung um die Rotationsachse des Zylinders im Gehäuse des Luftausströmers (10) drehbar gelagert ist. Die Absperrwand (52) erstreckt sich in Umfangsrichtung der Bodenfläche des Zylinders mindestens so weit, dass ein Luftkanal im Gehäuse des Luftausströmers (10) über die Absperrwand (52) vollständig verschließbar ist.

## Beschreibung

Es wird ein Luftausströmer beschrieben, der ein Gehäuse, ein Luftleitelement und eine Absperreinrichtung aufweist, wobei das Luftleitelement im Bereich einer Luftaustrittsöffnung im Gehäuse des Luftausströmers angeordnet und die Absperreinrichtung in Luftströmungsrichtung dem Luftleitelement vorgelagert ist.

### Stand der Technik

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können beispielsweise Kraftfahrzeuge, wie Pkw, Lkw oder Busse, Züge, Flugzeuge oder Schiffe sein. Bei Luftausströmern kann in der Regel neben der Steuerung der Ablenkung von ausgegebener Luft, beispielsweise von einer Klimaanlage, auch die Menge an ausgegebener Luft geregelt werden. Die Menge der zugeführten Luft wird über eine Steuereinrichtung geregelt, die beispielsweise mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A- oder B-Säule oder am Dach eines Kraftfahrzeugs angeordnet sein.

Luftausströmer in Kraftfahrzeugen weisen oftmals mindestens eine Gruppe von verschwenkbar gelagerten Lamellen auf, die eine Ablenkung der ausgegebenen Luft ermöglichen. Es sind zudem Luftausströmer entwickelt worden, die eine geringe Höhe im Vergleich zu ihrer Breite aufweisen. Bei diesen Luftausströmern ist das Platzangebot zum Verschwenken von Lamellen relativ gering.

Bei solchen Fugenausströmern ist oftmals ein Luftleitelement vorgesehen, das sich über die gesamte Breite erstreckt. Eine Vielzahl von parallel verschwenkbar gelagerten Lamellen ist in Blickrichtung auf den Luftausströmer hinter dem Luftleitelement bzw. in Luftströmungsrichtung vor diesem gelagert.

Ein Luftausströmer mit einem ähnlichen Aufbau ist weiter aus DE 10 2013 210 055 B3 bekannt. Der Luftausströmer weist ein Gehäuse und ein in dem Gehäuse befindliches Luftleitelement mit einer ersten Luftleitfläche und einer der ersten Luftleitfläche gegenüberliegenden und zur ersten Luftleitfläche symmetrischen zweiten Luftleitfläche auf. Durch das Gehäuse und die erste Luftleitfläche wird ein erster Luftkanal gebildet und durch das Gehäuse und die zweite Luftleitfläche wird ein zweiter Luftkanal gebildet, wobei der erste Luftkanal zum Transport eines ersten Volumenstroms von durch die Lufteintrittsöffnung in das Gehäuse einströmender Luft zur Luftaustrittsöffnung ausgebildet ist, und der zweite Luftkanal zum Transport eines zweiten Volumenstroms von der durch die Lufteintrittsöffnung in das Gehäuse einströmbaren Luft zur Luftaustrittsöffnung ausgebildet ist. Zusätzlich weist der Luftausströmer einen ersten Flügel auf, der an dem der Lufteintrittsöffnung zugewandten Ende des Luftleitelements beweglich angeordnet ist, wobei die Beweglichkeit des ersten Flügels so ausgebildet ist, dass aufgrund der Stellung des ersten Flügels das Verhältnis von erstem Volumenstrom zu zweitem Volumenstrom einstellbar ist.

Der aus DE 10 2013 210 055 B3 bekannte Luftausströmer sowie die weiteren aus dem Stand der Technik bekannten Fugenausströmer weisen jedoch den Nachteil auf, dass diese eine relativ große Erstreckung in Luftströmungsrichtung aufweisen. Zudem weisen die Luftausströmer eine Vielzahl von Bedienelementen auf, die zum Verstellen der ausströmenden Luft in die verschiedenen Richtungen und zum Absperren der abgegebenen Luft vorgesehen sind. Zudem sind eine Lamellenanordnung, ein Flügel bzw. horizontal verlaufende Lamellen und eine Absperreinrichtung erforderlich. Eine solche Anordnung erfordert jedoch einen langen Aufbau der einzelnen Komponenten hintereinander. Um den Aufbau entlang des Luftkanals zu reduzieren, sind aus dem Stand der Technik Vorschläge gemacht worden, welche jedoch zu einer übermäßig großen Erhöhung des Luftausströmers führen.

Die Vielzahl von verschiedenen Kinematikbauteilen stellt zudem einen komplexen Aufbau bereit, der störungsanfällig ist. Ferner erhöht ein solcher Aufbau die Kosten aufgrund der Vielzahl von benötigten Komponenten und deren Montage.

Aus der DE 690 10 617 D2 (EP 0423 778 B1) ist ein Verteiler, insbesondere für eine Kraftfahrzeugklimaanlage, bekannt. Diese besitzt einen Gehäuseaufbau mit Öffnungen für den Durchgang der Luft und ein in dem Gehäuse drehbares, zylindrisches Absperrorgan, welches dazu ausgebildet ist, das Strömen der Luft durch die Öffnungen zu drosseln. Weiterhin sind Mittel zum Drehen des Absperrorgans angeordnet, wodurch eine Drosselklappe an dem Absperrorgan um eine Achse angelenkt ist. Die Achse ist im Wesentlichen parallel zur Drehachse des Absperrorgans angeordnet. Es sind ferner Folgermittel zur Zusammenwirkung mit Nockenmitteln vorhanden, welche von dem Gehäuseaufbau getragen sind, um die Winkelsteuerung der Klappe relativ zum Absperrorgan zu variieren, wenn das Absperrorgan gedreht wird.

Aus der DE 197 39 652 A1 ist eine Belüftungsvorrichtung mit einem Gehäuse, das einen Einströmbereich, in welchen ein Luftkanal mündet, offenbart. Das Gehäuse besitzt weiterhin einen Ausströmbereich, in welchem eine Luftleiteinrichtung und eine Drosseleinrichtung angeordnet sind. Die Luftleiteinrichtung und die Drosseleinrichtung sind über Bedienelemente verstellbar. Die Drosseleinrichtung weist zwei Drosselelemente auf, welche relativ zueinander beweglich sind.

### Aufgabe

Es ist daher Aufgabe einen Luftausströmer anzugeben, der die Nachteile des Stands der Technik behebt, wobei der Luftausströmer eine geringe Höhe und eine geringe Erstreckung in Luftströmungsrichtung entlang eines Luftkanals aufweist und die Anzahl der benötigten Komponenten zur Steuerung der Menge der zugeführten Luft und zur Luftablenkung gering sind.

### Lösung

Die vorstehend genannte Aufgabe wird durch einen Luftausströmer gelöst, der ein Gehäuse, ein Luftleitelement und eine Absperreinrichtung aufweist, wobei
- das Luftleitelement im Bereich einer Luftaustrittsöffnung im Gehäuse des Luftausströmers angeordnet ist,
- die Absperreinrichtung in Luftströmungsrichtung dem Luftleitelement vorgelagert ist,
- die Absperreinrichtung eine Absperrwand aufweist, welche als Teil der Mantelfläche eines Zylinders ausgebildet ist,
- die Absperreinrichtung um die Rotationsachse des Zylinders im Gehäuse des Luftausströmers drehbar gelagert ist, und
- die Absperrwand sich in Umfangsrichtung der Bodenfläche des Zylinder mindestens so weit erstreckt, dass ein Luftkanal im Gehäuse des Luftausströmers über die Absperrwand vollständig verschließbar ist.

Der Luftausströmer ermöglicht über die Absperreinrichtung sowohl eine Steuerung der Menge der zugeführten Luft als auch eine Luftzuführung zu einem Bereich zwischen dem Luftleitelement und einer ersten gegenüberliegenden Gehäusewand sowie zu einem Bereich zwischen dem Luftleitelement und einer zweiten gegenüberliegenden Gehäusewand. Die Gehäusewände und das Luftleitelement sind dabei so ausgebildet, dass diese eine Luftablenkung unter Ausnutzung des Coanda-Effekts bereitstellen.

In Abhängigkeit der Position der Absperrwand wird der Luftkanal entweder vollständig abgesperrt, vollständig freigegeben oder die Luftzufuhr zu den verschiedenen Bereichen relativ zu dem Luftleitelement geregelt. Eine Luftzufuhr zu dem oberen Bereich bewirkt aufgrund der Ausbildung des Luftleitelements und der gegenüberliegenden Gehäusewand eine Luftablenkung nach unten. Analog bewirkt eine Luftzufuhr zu einem unteren Bereich zwischen dem Luftleitelement und einer gegenüberliegenden Gehäusewand eine Luftablenkung nach oben. Hierzu weist das Gehäuse des Luftausströmers in Luftströmungsrichtung einen entsprechenden Querschnitt für den Luftkanal auf.

Das Luftleitelement ist starr ausgebildet und wird nicht verstellt. In Blickrichtung auf den Luftausströmer von außen sind daher keine in Längsrichtung des Luftausströmers verlaufenden verschwenkbaren Lamellen oder andere Elemente sichtbar. Der Luftausströmer eignet sich daher insbesondere als sogenannter Fugenausströmer, wobei der Luftausströmer gegenüber seiner Breite eine relativ geringe Höhe aufweist. Alternativ kann der Luftausströmer natürlich auch orthogonal hierzu ausgerichtet sein und dabei eine größere Höhe als Breite aufweisen. Ferner kann der Luftausströmer auch schräg verlaufend angeordnet sein.

Der Luftausströmer kann weiter eine Ablenkeinrichtung aufweisen, welche zwischen dem Luftleitelement und der Absperreinrichtung angeordnet und derart ausgebildet ist, dass sie eine Luftablenkung zu einem ersten Abschnitt zwischen dem Luftleitelement und einer gegenüberliegenden Gehäusewand des Luftausströmers und einem zweiten Abschnitt zwischen dem Luftleitelement und einer gegenüberliegenden Gehäusewand des Luftausströmers bereitstellt. Die Ablenkeinrichtung leitet daher die einströmende Luft gezielt zu den beiden Abschnitten bzw. vorstehend genannten Bereichen über und unter dem Luftleitelement. Die Ablenkeinrichtung kann derart ausgebildet und angeordnet sein, dass in einer Stellung der Absperrwand diese direkt an der Ablenkeinrichtung anliegt, sodass die einströmende Luft entsprechend nur einem Bereich zugeführt wird.

Die Stellung der Absperrwand ist maßgeblich für die Luftablenkung über das Luftleitelement und die gegenüberliegenden Gehäusewände. In den Extremstellungen wird die Luft nur in den ersten Abschnitt bzw. zweiten Abschnitt gebracht und damit eine Luftablenkung nach unten und oben erreicht. Wird ein Teilluftstrom in einen der beiden Abschnitte zugelassen, so erfolgt eine gedämpfte Ablenkung nach unten und oben, in Abhängigkeit der Menge der zugeführten Luft, wobei die Summe der ausgegebenen Luftströme über den ersten Abschnitt und den zweiten Abschnitt die Richtung der ausgegebenen Luft bzw. der Luftablenkung um die Längsachse des Luftleitelementes definiert.

Der Luftausströmer kann eine Lamellenanordnung orthogonal zur Luftablenkung über das Luftleitelement aufweisen. Hierzu wird eine Luftablenkung in sämtliche Richtungen ermöglicht.

Der Vorteil des Luftausströmers gegenüber bekannten Luftausströmern bleibt dennoch bestehen, da die gesamten Abmaße des Luftausströmers im Vergleich zu anderen Luftausströmern auch bei einer Lamellenanordnung deutlich geringer sind. Dies liegt insbesondere daran, dass über die Absperreinrichtung die Funktion einer Lamelle zur Luftablenkung und die Funktion einer Schließklappe übernommen wird.

Die Lamellenanordnung kann mehrere um parallel verlaufende Achsen verschwenkbare Lamellen aufweisen, welche das Luftleitelement rückseitig mindestens abschnittsweise umgeben. Die Lamellenanordnung benötigt daher wenig Bauraum entlang der Luftströmungsrichtung im Luftkanal, sodass durch die Lamellenanordnung die erforderlichen Abmaße des Luftausströmers nicht übermäßig vergrößert werden.

Die Lamellenanordnung kann in weiteren Ausführungsformen eine erste Gruppe von Lamellen und eine zweite Gruppe von Lamellen aufweisen, welche um parallel verlaufende Achsen verschwenkbar sind, und wobei die erste Gruppe von Lamellen und die zweite Gruppe von Lamellen jeweils zwischen dem Luftleitelement und einer gegenüberliegenden Gehäusewand des Luftausströmers verschwenkbar gelagert sind. In einer solchen Ausführung befinden sich die Lamellen nicht in Luftströmungsrichtung zwischen dem Luftleitelement und der Absperreinrichtung, sodass trotz des Vorsehens von Lamellen die Gesamtlänge des Luftausströmers in Luftströmungsrichtung gering gehalten werden kann.

Die Lamellen der Lamellenanordnung können über eine Koppelstange miteinander verbunden sein und eine Lamelle der Lamellenanordnung oder jeweils eine Lamelle der ersten Gruppe von Lamellen und der zweiten Gruppe von Lamellen kann einen Lagerzapfen aufweisen, der aus dem Gehäuse des Luftausströmers herausgeführt ist und ein Bedienelement zum Verschwenken der Lamellen aufweist.

Über das Bedienelement werden die Lamellen verschwenkt, wobei das Bedienelement beispielsweise mit einem Bedienrad im Bereich einer Blende oder eines Steuerungsbereichs für den Luftausströmer gekoppelt ist. Sämtliche Lamellen der Lamellenanordnung weisen Lagerzapfen auf, über welche diese drehbar im Gehäuse und/oder Luftleitelement gelagert sind. Bei einer Ausführung mit um parallel verlaufende Achsen verschwenkbaren Lamellen, welche das Luftleitelement rückseitig mindestens abschnittsweise umgeben und über eine Koppelstange miteinander gekoppelt sind, befindet sich die Koppelstange im Bereich der Ablenkeinrichtung. Die Ablenkeinrichtung verhindert dabei, dass Luft auf die Koppelstange und beispielsweise Koppelzapfen der Lamellen trifft. Hierdurch werden störende Geräusche verhindert. Die Kinematikbauteile zum Verschwenken der Lamellen ragen daher nicht in den Strömungsweg der durchströmenden Luft.

Das Luftleitelement kann in einem Abschnitt eines Luftkanals des Luftausströmers mit gegenüberliegenden gekrümmten Gehäusewänden angeordnet sein. Die gekrümmten Gehäusewände sind so ausgebildet, dass an den Gehäusewänden entlangströmende Luft unter Ausnutzung des Coanda-Effekts in einer entsprechenden Richtung ausgegeben wird. Vorzugsweise weist das Luftleitelement eine korrespondierende Ausgestaltung auf, wobei die gekrümmten Gehäusewände konzentrisch zu dem Luftleitelement angeordnet und der Abstand zwischen dem Luftleitelement und den gegenüberliegenden gekrümmten Gehäusewänden im Wesentlichen gleich groß ist.

Die Absperreinrichtung kann Gegengewichte aufweisen, welche der Absperrwand gegenüberliegend angeordnet sind. Die Absperrwand der Absperreinrichtung ist als Teil der Mantelfläche eines Zylinders ausgebildet. Diese Mantelfläche kann mit gegenüberliegenden Wandelementen verbunden sein, welche sich im Bereich der Bodenfläche des Zylinders befinden. Diese Wandelemente können beispielsweise im Wesentlichen ein Viertel einer kreisrunden Fläche als Bodenfläche des Zylinders aufweisen. Diesen Wandelementen können entsprechend weitere Wandelemente gegenüberliegen, die im Wesentlichen ebenfalls dann als Viertel einer kreisrunden Bodenfläche des Zylinders ausgebildet sind. Die Gegengewichte weisen ein solches Gewicht auf, dass diese unabhängig von dem Verdrehwinkel der Absperreinrichtung die Lage und Position der Absperreinrichtung beibehalten. Die Gegengewichte weisen hierzu das Gewicht der gegenüberliegenden Wandelemente und der Absperrwand auf. In weiteren Ausführungsformen kann auch nur ein einzelnes Gegengewicht vorgesehen sein.

In noch weiteren Ausführungsformen erstreckt sich die Absperrwand in Umfangsrichtung der Bodenfläche des Zylinders um ein größeres oder kleineres Maß als in dem vorstehend genannten Beispiel beschriebenen Umfang. Die Ausmaße der Absperrwand richten sich insbesondere auch nach dem Öffnungsquerschnitt des Luftkanals, welcher abgesperrt werden soll, und dem Durchmesser der Absperreinrichtung bzw. des Zylinders, der durch die Absperreinrichtung definiert ist.

Mindestens die Absperreinrichtung kann motorisch oder manuell verstellbar sein. Ein manuelles Verstellen der Absperreinrichtung kann beispielsweise über ein Bedienrad erfolgen, das mit der Absperreinrichtung gekoppelt ist. Das Bedienrad kann mindestens abschnittsweise aus einer im Bereich des Luftausströmers angeordneten Blende hervorstehen und durch ein entsprechendes Verdrehen eine Rotation der Absperreinrichtung bewirken. Darüber hinaus kann die Absperreinrichtung auch motorisch, beispielsweise über einen Elektromotor, angetrieben werden. Steuersignale zum Ansteuern des Elektromotors können von einem nahegelegenen Bedienfeld oder einer entfernt angeordneten Steuereinrichtung übermittelt werden. Darüber hinaus kann auch eine Lamellenanordnung über eine dezentrale oder zentrale Steuereinrichtung gesteuert werden. Auch ein manuelles Verstellen, beispielsweise über ein weiteres Bedienrad, ist möglich. Darüber hinaus kann in weiteren Ausführungsformen auch eine Kopplung eines Bedienelements für die Absperreinrichtung und die Lamellenanordnung vorgesehen sein, wobei beispielsweise ein Joystick oder ein um zwei Achsen verkippbares Element vorgesehen ist. In Abhängigkeit des Verkippens des Bedienelements erfolgt dabei entweder eine Änderung der Ausrichtung der Lamellen oder ein abschnittsweises Verdrehen der Absperreinrichtung.

In weiteren Ausführungsformen kann das Bedienelement verdreht werden, um ein Verdrehen der Absperreinrichtung zu bewirken, und zusätzlich seitlich gekippt werden, um ein Verschwenken der Lamellen zu bewirken.

Die Absperreinrichtung kann auch kontinuierlich in eine Richtung verdreht werden, wobei lediglich eine Rotation in einer Richtung erforderlich ist. Darüber hinaus können sich weitere Ausströmeffekte ergeben, wenn die Absperrwand zur Luftablenkung, d. h. zum Zuführen von einströmender Luft in einen ersten oder zweiten Abschnitt, sich im Bereich einer Lufteinströmöffnung des Gehäuses befindet. In den vorstehend beschriebenen Ausführungsbeispielen ist die Absperrwand in der Regel so angeordnet, dass diese in Bezug auf die Ausrichtung des Zylinders der Absperreinrichtung der Luftaustrittsöffnung zugewandt ist. Bei einer Position der Absperreinrichtung im Bereich der Lufteintrittsöffnung kann ein diffuses Ausströmen bzw. ein gedämpfte Einströmen der Luft bereitgestellt werden, was folglich zu einer schwächeren Luftablenkung und/oder zusätzlichen Verwirbelung führen kann.

Das Luftleitelement kann keulenförmig und zur Luftaustrittsöffnung hin zulaufend ausgebildet sein. Die keulenförmige Ausgestaltung in Kombination mit einer konzentrisch dazu ausgerichteten Ausbildung der gekrümmten Gehäusewände ermöglicht eine definierte Luftablenkung und Ausnutzung des Coanda-Effekts über einen weiten Winkelbereich ausgehend von einer Luftaustrittsebene nach oben und unten bzw. zur Seite hin.

Das Luftleitelement ist hohl ausgebildet und kann in weiteren Ausführungsformen keine innenliegenden Komponenten aufweisen. Die Steuerung der Absperreinrichtung erfolgt außerhalb des Gehäuses des Luftausströmers, sodass keine Bedienmittel in den Luftkanal ragen. Zudem kann eine Koppelstange zum gemeinsamen Verschwenken der Lamellen einer Lamellenanordnung über eine Ablenkeinrichtung verdeckt sein, sodass auch diese Komponenten zum Verschwenken nicht direkt in den Luftkanal ragen und damit eine Beeinflussung der ausströmenden Luft bewirken. Wie vorstehend ausgeführt, kann eine der Lamellen einen aus dem Gehäuse des Luftausströmers herausragenden Lagerzapfen aufweisen, der mit einem Bedienelement gekoppelt ist. Hierüber ist ein Verschwenken der Lamellen auch außerhalb des Gehäuses des Luftausströmers möglich, sodass die Bedienelemente hierfür nicht in den Luftkanal ragen.

Bei den hierin beschriebenen Luftausströmern erfolgt daher keine Beeinflussung der durchströmenden Luft durch die Kinematikbauteile. Zudem sind deutlich weniger Bauteile zur Luftablenkung und zur Steuerung der Menge der ausgegebenen Luft erforderlich. Ferner übernimmt die Absperreinrichtung sowohl die Steuerung der Menge der ausgegebenen Luft als auch die Steuerung der Richtung der ausgegebenen Luft.

In weiteren Ausführungsformen kann das Gehäuse des Luftausströmers aus zwei Gehäusehälften bestehen, die im Wesentlichen identisch ausgebildet sein können. Die Ablenkeinrichtung und das Luftleitelement können als Teile des Gehäuses, beispielsweise als Gehäuseunterteil und Gehäuseoberteil, hälftig vorgesehen sein. Bei der Montage des Luftausströmers werden die Bauteile auf eine Gehäusehälfte auf bzw. in diese eingesetzt und anschließend die zweite Gehäusehälfte aufgesetzt und mit der unteren verbunden. Hierüber wird ein einfacher Luftausströmer bereitgestellt, der wenig Bauteile aufweist, einfach und schnell zu montieren und daher kostengünstig ist.

Die Bestandteile des Luftausströmers können beispielsweise aus Kunststoff bestehen und in einem Spritzgussprozess in hoher Stückzahl kostengünstig hergestellt werden.

Bei der Nachbearbeitung von Gehäuseteilen können beispielsweise Durchgangsbohrungen für eine der Lamellen vorgesehen werden, die über einen korrespondierenden Lagerzapfen mit einem Bedienelement verbunden wird. Die Ausbildung zweier wesentlich identischer Gehäusehälften ermöglicht es die Herstellungskosten und den Herstellungsaufwand für einen derartigen Luftausströmer weiter wesentlich zu reduzieren und zu vereinfachen.

Bei dem Luftausströmer erfolgt eine Kombination mehrerer Funktionen mit geringer Anzahl an benötigten Einzelteilen.

In weiteren Ausführungsformen können auch Beleuchtungselemente vorgesehen sein. Hierzu können Leuchtdioden im Bereich des Gehäuses angeordnet sein, die eine direkte oder indirekte Beleuchtung der Komponenten bewirken. Ferner können die Komponenten lichtleitende Elemente aufweisen oder aus einem lichtleitenden Material hergestellt werden. Insbesondere die Ausbildung des Luftleitelementes als Bestandteil des Gehäuses ermöglicht ein Einbringen weiterer Elemente und Komponenten in den Innenraum des Luftleitelements, ohne dass es zu einer Beeinträchtigung des Luftausströmers oder zu einer ungewollten Luftablenkung kommt. Beispielsweise kann das Luftleitelement transparente Bereiche aufweisen, die eine Beleuchtung des Innenraums bzw. des Luftkanals jeweils hierüber bewirken. Zusätzlich sind dann in dem Luftleitelement Leuchtmittel angeordnet. Die Leuchtmittel können beispielsweise durch eine Leuchtdiode oder Lichtleiter bereitgestellt werden.

Die hierin beschriebene Ausführung eines Luftausströmers mit wenigen Komponenten und deren einfacher Aufbau reduziert auch die Geräuschbildung bei Fahrten in einem Kraftfahrzeug über holprige Strecken, da wenige Bauteile vorgesehen sind. Zudem weist der Luftausströmer wenig filigrane Bauteile auf, wie sie bei konventionellen Luftausströmern aus dem Stand der Technik benötigt werden. Es kommt daher bei dem Luftausströmer zu keinem "Klappern" oder anderen störenden Geräuschen.

### Kurzbeschreibung der Figuren

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Luftausströmers;
- Fig. 2: eine Schnittansicht durch den Luftausströmer von Fig. 1;
- Fig. 3: eine perspektivische Darstellung eines Gehäuseteils des Luftausströmers von Fig. 1;
- Fig. 4: eine perspektivische Darstellung einer Absperreinrichtung des Luftausströmers von Fig. 1;
- Fig. 5: eine perspektivische Darstellung einer mit einem Bedienelement gekoppelten Lamelle des Luftausströmers von Fig. 1;
- Fig. 6: eine perspektivische Darstellung des Luftausströmers von Fig. 1 ohne ein oberes Gehäuseteil;
- Fig. 7: eine weitere Schnittansicht durch den Luftausströmer von Fig. 1;
- Fig. 8: den Luftausströmer von Fig. 1 im Schnitt mit vollständig geöffnetem Luftkanal;
- Fig. 9: den Luftausströmer von Fig. 1 im Schnitt in einer abgelenkten Stellung;
- Fig. 10: den Luftausströmer von Fig. 1 im Schnitt in einer weiteren abgelenkten Stellung; und
- Fig. 11: den Luftausströmer von Fig. 1 im Schnitt mit vollständig verschlossenem Luftkanal.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

### Ausführliche Beschreibung eines Ausführungsbeispiels

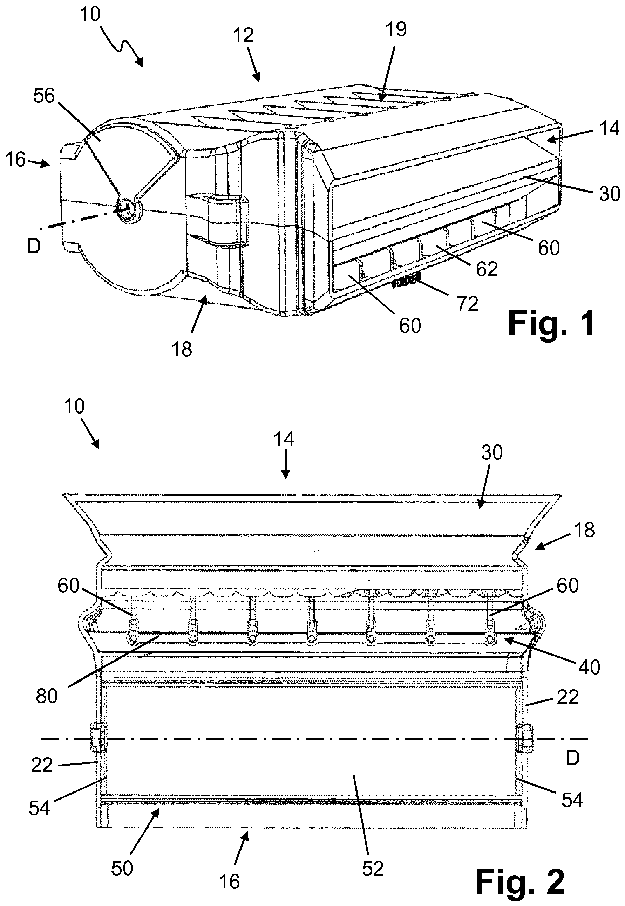

Fig. 1 zeigt eine perspektivische Darstellung eines Luftausströmers 10. Der Luftausströmer 10 kann beispielsweise in einem Armaturenbrett eines Fahrzeugs angeordnet sein. Im Bereich des Armaturenbretts können weitere solche Luftausströmer 10 vorgesehen sein. Der Luftausströmer 10 ist als Fugenausströmer ausgebildet und weist daher eine wesentlich größere Breite als Höhe auf.

Der Luftausströmer 10 weist ein Gehäuse 12 auf, das aus einem unteren Gehäuseteil 18 und einem oberen Gehäuseteil 19 besteht.

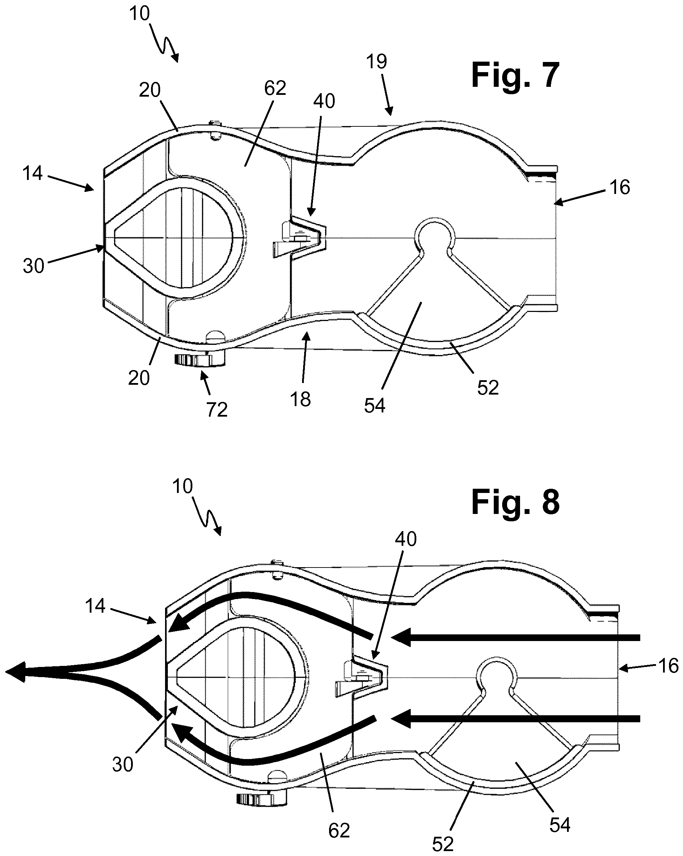

Die beiden Gehäuseteile bzw. -hälften 18 und 19 bilden teilweise ein Luftleitelement 30 sowie eine in Fig. 1 nicht dargestellte Ablenkeinrichtung 40 aus. Im zusammengebauten Zustand (Fig. 1) bilden die beiden Gehäuseteile 18 und 19 ein Luftleitelement 30 aus, welches sich im Bereich einer Luftaustrittsöffnung 14 befindet. Das Luftleitelement 30 weist einen keulenförmigen Querschnitt (siehe Fig. 7) auf. Der Längsrichtung des Luftleitelements 30 gegenüberliegende Gehäusewände 20 sind gekrümmt ausgebildet und verlaufen im Wesentlichen konzentrisch zu dem Luftleitelement 30.

Aus dem Luftausströmer 10 ausströmende Luft wird daher unter Ausnutzung des Coanda-Effekts durch die Oberflächen des Luftleitelements 30 und der gegenüberliegenden Gehäusewände 20 abgelenkt.

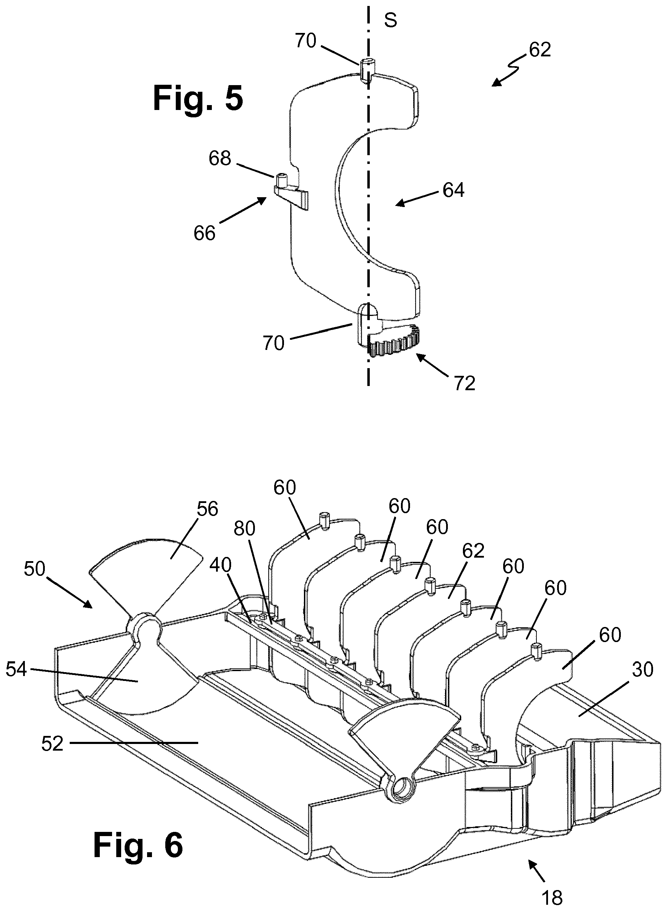

Der Luftausströmer 10 weist zusätzlich eine Lamellenanordnung auf, die aus einer Vielzahl von Lamellen 60 und 62 besteht. Die Lamelle 62 (siehe Fig. 5) ist als Steuerlamelle ausgebildet und weist einen Lagerzapfen 70 auf, der aus dem unteren Gehäuseteil 18 herausgeführt und mit einem Bedienelement 72 verbunden ist. Die Lamelle 62 und die Lamellen 60 sind um parallel verlaufende Schwenkachsen S über ihre Lagerzapfen 70 im Gehäuse 12 des Luftausströmers 10 drehbar gelagert. Ein Verdrehen des Bedienelements 72 bewirkt aufgrund der Kopplung mit dem Lagerzapfen 70 ein Verschwenken der Lamelle 62 und über eine Koppelstange 80 ein Verschwenken der anderen Lamellen 60.

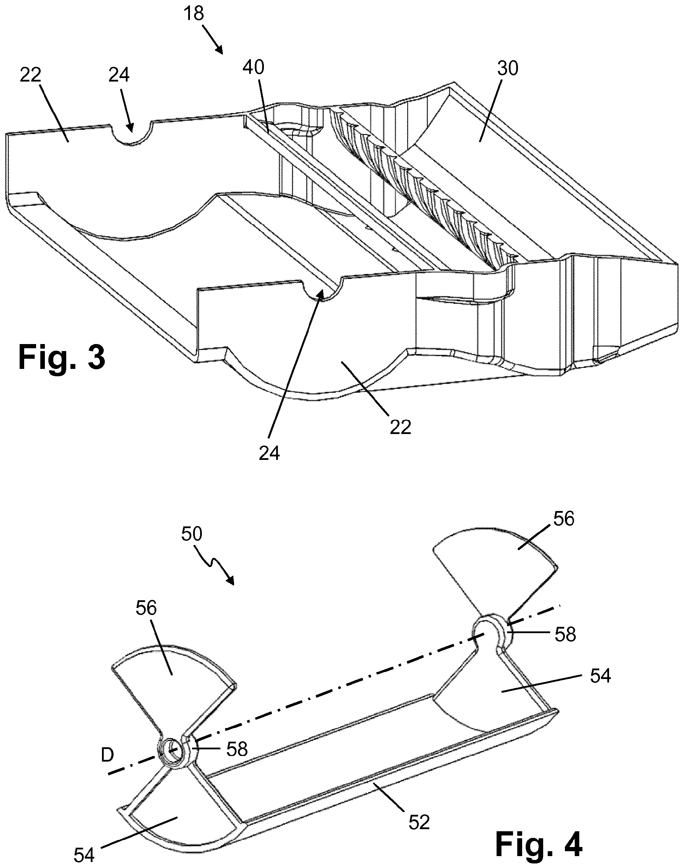

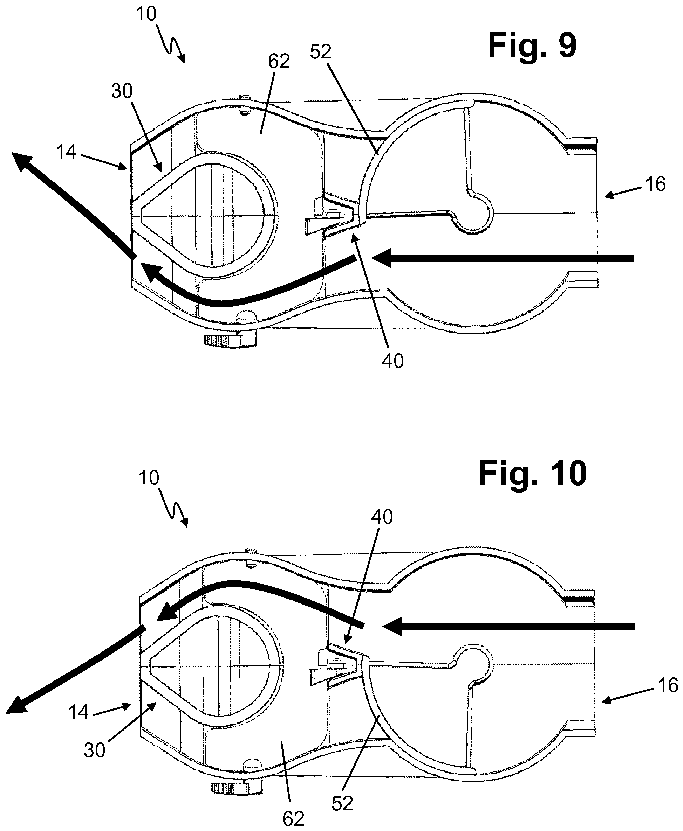

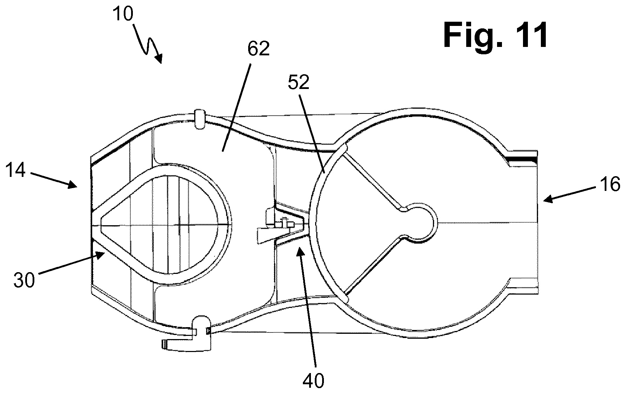

Im Bereich einer Lufteintrittsöffnung 16 ist im Gehäuse 12 eine Absperreinrichtung 50 angeordnet. Die Absperreinrichtung 50 weist eine Absperrwand 52 (siehe Fig. 4) auf, welche als Teil der Mantelfläche eines Zylinders ausgebildet ist. Die Absperreinrichtung 50 ist um eine Drehachse D drehbar im Gehäuse 12 gelagert, wobei in Abhängigkeit der Stellung der Absperrwand 52 der Luftkanal durch das Gehäuse 12 des Luftausströmers 10 entweder vollständig freigegeben (siehe Fig. 8), vollständig verschlossen (siehe Fig. 11) oder in verschiedene Zwischenstellungen (siehe beispielsweise Fig. 9, 10) bringbar ist.

Über die Lufteintrittsöffnung 16 wird beispielsweise klimatisierte Luft von einer Fahrzeugklimaanlage zugeführt. Die zugeführte Luft kann über den Luftausströmer 10 abgelenkt werden, sodass sich ein entsprechend gerichteter Luftstrom in einem Fahrzeug einstellt. Zusätzlich kann der Luftstrom über die Absperreinrichtung 50 auch vollständig unterbrochen werden.

Der Luftausströmer 10 weist keine Luftablenkeinrichtung entlang des Luftleitelements 30 auf, sodass der Luftausströmer 10 insgesamt eine geringe Bauraumhöhe und -tiefe aufweist.

Zudem weist der Luftausströmer 10 wenige Komponenten auf. Die Kosten für die Herstellung und die Montage des Luftausströmers 10 sind daher gering. Darüber hinaus werden Störgeräusche wie ein Pfeifen oder ein Klappern der Komponenten verhindert. Zudem erlaubt die hierin beschriebene Ausgestaltung des Luftausströmers 10 die Bereitstellung zweier verschiedener Funktionen (Luftablenkung und Luftmengensteuerung) über eine einzige Vorrichtung.

Fig. 2 zeigt eine Schnittansicht durch den Luftausströmer 10 von Fig. 1. Die Lamellen 60 und 62 der Lamellenanordnung befinden sich in Luftströmungsrichtung direkt vor dem Luftleitelement 30. Die Lamellen 60 und 62 sind über eine Koppelstange 80 miteinander verbunden. Wird die Lamelle 62 verschwenkt, erfolgt automatisch ein Verschwenken der anderen Lamellen 60. Der Koppelabschnitt 66 der Lamellen 60 und 62 mit der Koppelstange 80 wird über eine Ablenkeinrichtung 40 verdeckt. Die Ablenkeinrichtung 40 dient sowohl zur Luftablenkung in einen oberen und einen unteren Abschnitt zwischen dem Luftleitelement 30 und den gegenüberliegenden Gehäusewänden 20 als auch zum Fernhalten der durchströmenden Luft von dem Koppelabschnitt 66. Insbesondere sind die Lamellen 60 und 62, die Ablenkeinrichtung 40 und das Luftleitelement 30 so angeordnet, dass diese keinen großen Abstand zueinander aufweisen. Vorzugsweise besteht im Wesentlichen kein Abstand zwischen der Ablenkeinrichtung 40 und den Lamellen 62 und 60 in einer Neutralstellung der Lamellen 60 und 62 (siehe beispielsweise Fig. 7) .

Die Absperreinrichtung 50 ist derart im Gehäuse 12 angeordnet, dass die Wandelemente 54 an gegenüberliegenden Gehäusewänden 22 des Gehäuses 12 anliegen. Zwischen den Wandelementen 54 und Gegengewichten 56 (siehe Fig. 4) weist die Absperreinrichtung 50 Lagerabschnitte 58 auf, über welche die Absperreinrichtung 50 in entsprechenden Lageröffnungen 24 im Gehäuse 12 drehbar gelagert ist.

Fig. 3 zeigt eine perspektivische Darstellung eines Gehäuseteils 18 des Luftausströmers 10 von Fig. 1. Das Gehäuseteil 18 ist im Wesentlichen identisch zu dem Gehäuseteil 19 ausgebildet. Das Gehäuseteil 18 und das Gehäuseteil 19 bilden damit zur Hälfte die Ablenkeinrichtung 40 und das Luftleitelement 30 aus. Das Luftleitelement 30 ist hohl ausgeführt. Die integrale Ausbildung der Ablenkeinrichtung 40 und des Luftleitelements 30 mit den Gehäuseteilen 18 und 19 vermindert störende Geräusche, da keine Spalte zwischen Luftleitelementen und Gehäusewänden bestehen.

Fig. 4 zeigt eine perspektivische Darstellung einer Absperreinrichtung 50 des Luftausströmers 10 von Fig. 1. Die Absperrwand 52 erstreckt sich im Wesentlichen um 90° entlang einer kreisrunden Zylinderfläche. Die Wandelemente 54, die mit der Absperrwand 52 verbunden sind, sind daher als Segment einer Scheibe ausgebildet. Am zulaufenden Ende der Wandelemente 54 befinden sich Lagerstellen. Die Lagerstellen weisen einen Lagerabschnitt 58 auf, über welchen die Absperreinrichtung 50 in den Lageröffnungen 24 an deren Umfangsflächen aufliegt. Die Absperreinrichtung 50 ist daher über die Lagerabschnitte 58 und die Lageröffnungen 24 um die Drehachse D drehbar im Gehäuse 12 gelagert. Die Absperreinrichtung 50 weist zusätzlich Gegengewichte 56 auf, die im Wesentlichen so ausgebildet sind, wie die Wandelemente 54. Die Gegengewichte 56 sind versetzt entlang der Drehachse D zu den Wandelementen 54 angeordnet, wobei die Gegengewichte 56 einen größeren Abstand zueinander aufweisen als die beiden Wandelemente 54. Im eingebauten Zustand der Absperreinrichtung 50 liegen daher die Wandelemente 54 an den Innenseiten der Gehäusewände 22 an und die Gegengewichte 56 liegen an den Außenflächen der Gehäusewände 22 an. Die Gegengewichte 56 befinden sich daher nicht im Luftkanal des Luftausströmers 10. Die Gegengewichte 56 weisen ein solches Gewicht auf, dass diese in sämtlichen Stellungen der Absperreinrichtung 50 diese in Position halten. Vorzugsweise entspricht das Gewicht der Gegengewichte 56 dem Gewicht der Wandelemente 54 und der Absperrwand 52.

Fig. 5 zeigt eine perspektivische Darstellung einer mit einem Bedienelement 72 gekoppelten Lamelle 62 des Luftausströmers 10 von Fig. 1.

Die Lamelle 62 weist entlang der Schwenkachse S verlaufende Lagerzapfen 70 auf, die in entsprechenden Öffnungen im Gehäuse 12 des Luftausströmers 10 drehbar aufgenommen sind. An dem unteren Lagerzapfen 70 ist ein Bedienelement 72 angebracht, über welches ein Verschwenken der Lamelle 72 erfolgt. Die Lamelle 62 weist zusätzlich eine Öffnung 64 auf. Die Öffnung 64 ist so ausgebildet, dass diese die Rückseite des Luftleitelements 30 im Wesentlichen umgibt. Die Abschnitte der Lamelle 62 im Bereich der Lagerzapfen 70 erstrecken sich daher über das Luftleitelement 30 und sind, wie in Fig. 1 schematisch dargestellt, von außen sichtbar.

An der Rückseite weist die Lamelle 62 einen Koppelabschnitt 66 mit einem Koppelzapfen 68 auf. Der Koppelzapfen 68 ist in einer entsprechenden Öffnung der Koppelstange 80 aufgenommen. Die weiteren Lamellen 60 weisen im Wesentlichen den gleichen Aufbau auf wie die Lamelle 62. Jedoch unterscheiden sich die Lamellen 60 von der Lamelle 62 dadurch, dass die Lamellen 60 kein Bedienelement 72 aufweisen.

Fig. 6 zeigt eine perspektivische Darstellung des Luftausströmers 10 von Fig. 1 ohne oberes Gehäuseteil 19.

Wie in Fig. 6 dargestellt verhindert die Ablenkeinrichtung 40 ein Einströmen von Luft zu dem Koppelabschnitt 66 und der Koppelstange 80, wodurch störende Geräusche vermieden werden. Die Ablenkeinrichtung 40 leitet die Luft zu einem ersten Abschnitt und zu einem zweiten Abschnitt zwischen dem Luftleitelement 30 und den gegenüberliegenden gekrümmten Gehäusewänden 20.

Wie weiter in Fig. 6 dargestellt, ist das Gehäuse 12 des Luftausströmers 10 so ausgebildet, dass in einer Stellung der Absperreinrichtung 50 mit einem vollständig geöffneten Luftkanal die Absperrwand 52 nicht in den Strömungsweg der einströmenden Luft ragt. Hierzu weist das Gehäuse 12 abgerundete Bereiche auf, die so dimensioniert sind, dass diese im Wesentlichen dem Ausmaß der Absperrwand 52 entsprechen.

Fig. 7 zeigt eine weitere Schnittansicht durch den Luftausströmer 10 von Fig. 1. Wie dargestellt, ist die Absperrwand 52 in einer entsprechend gekrümmten Ausnehmung des Gehäuses 12 aufgenommen, sodass einströmende Luft ohne Ablenkung durch die Absperrwand 52 einströmen kann.

Die Gehäusewände 20 und das Luftleitelement 30 sind so ausgebildet, dass diese eine Luftablenkung unter Ausnutzung des Coanda-Effekts bereitstellen. Zudem sind die Lamellen 62 und 60 so geformt, dass diese das Luftleitelement 30 rückseitig mindestens abschnittsweise umgeben. Die Anordnung der Schwenkachse S ermöglicht zudem eine Anordnung, wobei in sämtlichen Stellungen der Lamellen 60 und 62 der Abstand zwischen dem Luftleitelement 30 und den die Öffnung 64 umgebenden Abschnitten möglichst gering ist.

Fig. 7 verdeutlich die Ausbildung der Ablenkeinrichtung 40, die so ausgebildet ist, dass eine gezielte Luftablenkung in einen oberen bzw. unteren Abschnitt möglich ist. Zudem verhindert die Ablenkeirichtung 40 eine Luftzufuhr in den Koppelabschnitt 66 und zu der Koppelstange 80.

Die Steuerung der Lamellen 60 und 62 erfolgt über das Bedienelement 72, welches außerhalb des Gehäuses angeordnet und mit dem Lagerzapfen 70 verbunden ist.

Die Absperreinrichtung 50 kann beispielsweise über eine Zahnradanordnung oder eine Hebeleinrichtung sowie einen Elektromotor angetrieben und damit um die Drehachse D verdreht werden. Die Steuerung der Absperreinrichtung 50 und die Komponenten hierfür liegen ebenfalls außerhalb des Luftkanals und des Gehäuses 12, sodass keine Beeinträchtigung der durchströmenden Luft auftritt.

Fig. 8 zeigt den Luftausströmer 10 von Fig. 1 im Schnitt mit einem vollständig geöffneten Luftkanal. Der Strömungsweg der Luft ist durch die schwarzen Pfeile angedeutet. Bei der in Fig. 8 gezeigten Stellung befindet sich die Absperrwand 52 im Bereich der Ausnehmung des Gehäuses 12, wobei keine Luftablenkung erfolgt. Zudem erfolgt keine Absperrung des Luftkanals. Da die zugeführte Luft zu gleichen Teilen in den oberen und den unteren Abschnitt zwischen dem Luftleitelement 30 und den gegenüberliegenden gekrümmten Gehäusewänden 20 strömen kann, bewirkt die Luftablenkung unter Ausnutzung des Coanda-Effekts ein im Wesentlichen gleichmäßiges und geradliniges Ausströmen.

Fig. 9 zeigt den Luftausströmer 10 von Fig. 1 im Schnitt in einer abgelenkten Stellung, wobei über die Absperrwand 52 ein oberer Abschnitt eines hinteren Bereichs des Luftkanals vollständig verschlossen ist. Die Absperrwand 52 liegt derart an der Ablenkeinrichtung 40 an, dass diese bündig miteinander abschließen. Zu diesem Zweck kann die Absperrwand 52 entsprechend gekrümmte Wandbereiche an ihren Längsseiten aufweisen. Wie dargestellt, gelangt die einströmende Luft nur in den unteren Abschnitt zwischen dem Luftleitelement 30 und der Gehäusewand 20, sodass unter Ausnutzung des Coanda-Effekts eine Luftablenkung nach oben erfolgt.

Fig. 10 zeigt den Luftausströmer 10 von Fig. 1 im Schnitt in einer weiteren abgelenkten Stellung, wobei ein hinterer unterer Bereich des Luftkanals über die Absperrwand 52 verschlossen ist und die Absperrwand 52 derart an der Ablenkeinrichtung 40 anliegt, dass eine Kante der Absperrwand 52 bündig mit der Ablenkeinrichtung 40 abschließt.

Wie dargestellt, gelangt einströmende Luft nur in den oberen Abschnitt zwischen dem Luftleitelement 30 und der gegenüberliegenden Gehäusewand 20, sodass unter Ausnutzung des Coanda-Effekts eine Luftablenkung nach unten erfolgt.

Die Fig. 9 und 10 zeigen Extremstellungen. Beispielsweise kann die Absperrwand 52 einen oberen oder unteren Abschnitt des Luftkanals auch nur teilweise verschließen, sodass sowohl ein Luftstrom in einen unteren als auch in einen oberen Abschnitt zwischen dem Luftleitelement 30 und den gegenüberliegenden Gehäusewänden 20 bereitgestellt wird, wobei die jeweils zugeführten Luftströme unterschiedlich stark ausgebildet sind. Hierüber ergibt sich eine weniger starke Ablenkung nach oben und unten als in den Fig. 9 und 10 gezeigt.

Fig. 11 zeigt den Luftausströmer 10 von Fig. 1 im Schnitt mit einem vollständig verschlossenem Luftkanal. Hierzu ist die Absperreinrichtung 50 soweit verdreht worden, dass die Absperrwand 52 den Luftkanal vollständig verschließt. Einströmende Luft kann daher nicht in den Bereich zwischen dem Luftleitelement 30 und der Absperrwand 52 gelangen. Um störende Geräusche wie ein Pfeifen oder Zischen zu verhindern, kann die Absperrwand 52 sich soweit entlang einer Bodenfläche des Zylinders erstrecken, dass diese im verschlossenen Zustand des Luftkanals eine größere Anlagefläche an den entsprechenden Gehäusewänden mit den gekrümmten Bereichen aufweist. Zudem können Dichtelemente vorgesehen sein, die eine Abdichtung bereitstellen. Die Ausbildung der Ablenkeinrichtung 50 und insbesondere die Krümmung der Absperrwand 52 können zudem als "Segel" wirken, wobei die einströmende Luft auch bei starken Geschwindigkeiten kein unbeabsichtigtes Verdrehen der Absperreinrichtung 50 bewirken kann. In Kombination mit den Gegengewichten 56 befindet sich die Absperreinrichtung stets in einem ausbalancierten Zustand. Bei einem teilweise freigegebenen Luftkanal ist eine Blockierung eines solchen Zustands in der Regel notwendig. Bei dem in Fig. 11 gezeigten Zustand kann jedoch eine Arretierung bzw. Selbsthaltung unterstützt werden.

Zusätzlich zu einem Verdrehen der Absperreinrichtung 50 können die Lamellen 60 und 62 verschwenkt werden, sodass eine orthogonal hierzu verlaufende Luftablenkung erfolgt.

Die Absperreinrichtung 50 stellt bei dem hierin beschriebenen Luftausströmer sowohl eine Luftablenkung als auch eine Luftmengensteuerung bereit.

### Bezugszeichenliste

- 10: Luftausströmer
- 12: Gehäuse
- 14: Luftaustrittsöffnung
- 16: Lufteintrittsöffnung
- 18: Gehäuseteil
- 19: Gehäuseteil
- 20: Gehäusewand
- 22: Gehäusewand
- 24: Lageröffnung
- 30: Luftleitelement
- 40: Ablenkeinrichtung
- 50: Absperreinrichtung
- 52: Absperrwand
- 54: Wandelement
- 56: Gegengewicht
- 58: Lagerabschnitt
- 60: Lamelle
- 62: Lamelle
- 64: Öffnung
- 66: Koppelabschnitt
- 68: Koppelzapfen
- 70: Lagerzapfen
- 72: Bedienelement
- 80: Koppelstange

- D: Drehachse
- S: Schwenkachse

## Patentansprüche

1. Luftausströmer, aufweisend ein Gehäuse (12), ein Luftleitelement (30) und eine Absperreinrichtung (50), wobei
- das Luftleitelement (30) im Bereich einer Luftaustrittsöffnung (14) im Gehäuse (12) des Luftausströmers (10) angeordnet ist,
- die Absperreinrichtung (50) in Luftströmungsrichtung dem Luftleitelement (30) vorgelagert ist,
- die Absperreinrichtung (50) eine Absperrwand (52) aufweist, welche als Teil der Mantelfläche eines Zylinders ausgebildet ist,
- die Absperreinrichtung (50) um die Rotationsachse des Zylinders im Gehäuse (12) des Luftausströmers (10) drehbar gelagert ist, und
- die Absperrwand (52) sich in Umfangsrichtung der Bodenfläche des Zylinders mindestens so weit erstreckt, dass ein Luftkanal im Gehäuse (12) des Luftausströmers (10) über die Absperrwand (52) vollständig verschließbar ist.

2. Luftausströmer nach Anspruch 1, aufweisend eine Ablenkeinrichtung (40), welche zwischen dem Luftleitelement (30) und der Absperreinrichtung (50) angeordnet und derart ausgebildet ist, dass sie eine Luftablenkung zu einem ersten Abschnitt zwischen dem Luftleitelement (30) und einer gegenüberliegenden Gehäusewand (20) des Luftausströmers (10) und einem zweiten Abschnitt zwischen dem Luftleitelement (30) und einer gegenüberliegenden Gehäusewand (20) des Luftausströmers (10) bereitstellt.

3. Luftausströmer nach Anspruch 1 oder 2, aufweisend eine Lamellenanordnung zur Luftablenkung orthogonal zur Luftablenkung über das Luftleitelement (30).

4. Luftausströmer nach Anspruch 3, wobei die Lamellenanordnung mehrere um parallel verlaufende Achsen verschwenkbare Lamellen (60; 62) aufweist, welche das Luftleitelement (30) rückseitig mindestens abschnittsweise umgeben.

5. Luftausströmer nach Anspruch 3, wobei die Lamellenanordnung eine erste Gruppe von Lamellen und eine zweite Gruppe von Lamellen aufweist, welche um parallel verlaufende Achsen verschwenkbar sind, und wobei die erste Gruppe von Lamellen und die zweite Gruppe von Lamellen jeweils zwischen dem Luftleitelement (30) und einer gegenüberliegenden Gehäusewand (20) des Luftausströmers (10) verschwenkbar gelagert sind.

6. Luftausströmer nach Anspruch 4 oder 5, wobei die Lamellen (60; 62) der Lamellenanordnung über eine Koppelstange (80) miteinander verbunden sind und eine Lamelle (62) der Lamellenanordnung oder jeweils eine Lamelle der ersten Gruppe von Lamellen und der zweiten Gruppe von Lamellen einen Lagerzapfen (70) aufweisen, der aus dem Gehäuse (12) des Luftausströmers (10) herausgeführt ist und ein Bedienelement (72) zum Verschwenken der Lamellen (60; 62) aufweist.

7. Luftausströmer nach einem der Ansprüche 1 bis 6, wobei das Luftleitelement (30) in einem Abschnitt eines Luftkanals des Luftausströmers (10) mit gegenüberliegenden gekrümmten Gehäusewänden (20) angeordnet ist.

8. Luftausströmer nach einem der Ansprüche 1 bis 7, wobei die Absperreinrichtung (50) Gegengewichte (56) aufweist, welche der Absperrwand (52) gegenüberliegend angeordnet sind.

9. Luftausströmer nach einem der Ansprüche 1 bis 8, wobei mindestens die Absperreinrichtung (50) motorisch oder manuell verstellbar ist.

10. Luftausströmer nach einem der Ansprüche 1 bis 9, wobei das Luftleitelement (30) keulenförmig und zur Luftaustrittsöffnung (14) hin zulaufend ausgebildet ist.
